# EUROPÄISCHE PATENTSCHRIFT

(11) **EP 2 114 738 B1**
(45) Veröffentlichungstag und Bekanntmachung des Hinweises auf die Patenterteilung: **29.08.2012**
(21) Anmeldenummer: 07821884.9
(22) Anmeldetag: 26.10.2007
(51) Int. Cl.: B60S 1/34

(54) **SCHEIBENWISCHVORRICHTUNG, INSBESONDERE FÜR EIN KRAFTFAHRZEUG**
WIPER DEVICE, IN PARTICULAR FOR A MOTOR VEHICLE
DISPOSITIF ESSUIE-GLACE, NOTAMMENT POUR UN VÉHICULE AUTOMOBILE

(30) Priorität: 19.12.2006 DE 102006059931
(43) Veröffentlichungstag der Anmeldung: 11.11.2009
(73) Patentinhaber: Robert Bosch GmbH, 70442 Stuttgart (DE)
(72) Erfinder: PAULI, Stephan, 77855 Achern (DE); BOHN, Roland, 77815 Buehl (DE); FRIDERICHS, Guenther, 77836 Schwarzach (DE)
(86) Internationale Anmeldenummer: PCT/EP2007/061522
(87) Internationale Veröffentlichungsnummer: WO 2008/074556

(56) Entgegenhaltungen:
- EP-A- 0 947 401
- FR-A- 2 716 656
- JP-A- 2005 324 710

## Beschreibung

Die Erfindung bezieht sich auf eine Scheibenwischvorrichtung, insbesondere für ein Kraftfahrzeug, nach dem Oberbegriff des Anspruches 1.

### Stand der Technik

In der DE 100 37 666 A1 wird eine Scheibenwischvorrichtung für ein Kraftfahrzeug beschrieben, die einen Antriebsmotor zum Antrieb des Wischarmes aufweist. Hierzu ist der Antriebsmotor mit einer Abtriebswelle gekoppelt, auf der der Wischarm aufsitzt und die in einer Lageraufnahme im Gehäuse der Scheibenwischvorrichtung drehbar gelagert ist.

Der Abschnitt der Abtriebswelle, welcher mit dem Wischarm gekoppelt ist, liegt auf der Fahrzeugaußenseite und ist den Wettereinflüssen ausgesetzt. Es muss daher Sorge getragen werden, dass kein Wasser in die Lageraufnahme der Abtriebswelle und weiter bis zum motorischen Antrieb gelangen kann, da andernfalls die Gefahr des Motorversagens und der Funktionsuntüchtigkeit der Scheibenwischvorrichtung droht.

Die JP 2005 324710 A offenbart eine Scheibenwischvorrichtung mit einer motorisch angetriebenen Abtriebswelle, die in einer buchsenförmigen Lageraufnahme drehbar aufgenommen ist. Auf die Lagerbuchse ist eine Wasserschutzkappe aufgesetzt, die einen schirmförmigen Aufnahmebereich aufweist sowie einen Ablaufkanal, der im Bereich der tiefsten Position in den schirmförmigen Aufnahmebereich einmündet und dort gesammeltes Wasser ableitet. Die Wasserschutzkappe sitzt drehfest auf der Abtriebswelle auf und wird gemeinsam mit dieser in eine Rotationsbewegung versetzt.

Die Wasserschutzkappe der benötigt einen verhältnismäßig großen Bauraum für den schirmähnlichen Aufnahmebereich sowie den Ablaufkanal, der radial verhältnismäßig weit von der Achse der Antriebswelle entfernt ist. Da die Wasserschutzkappe mit der Abtriebswelle mitrotiert, muss vom Antriebsmotor aufgrund der Raum greifenden Ausführung und des großen radialen Abstands der äußeren Wandungen des schirmförmigen Aufnahmebereichs sowie des Ablaufkanals ein verhältnismäßig hohes Trägheitsmoment beschleunigt werden.

### Offenbarung der Erfindung

Der Erfindung liegt die Aufgabe zugrunde, eine Scheibenwischvorrichtung betriebssicher auszubilden. Es soll insbesondere ein unerwünschtes Eindringen von Wasser in die Lageraufnahme der den Wischarm betätigenden Abtriebswelle verhindert werden.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischvorrichtung, die insbesondere in Kraftfahrzeugen eingesetzt wird, und zwar bevorzugt als Heckscheibenwischvorrichtung, umfasst einen Antriebsmotor, dessen Anker über ein Getriebe mit einer Abtriebswelle gekoppelt ist, welche in einer Lageraufnahme in einem Gehäuse der Scheibenwischvorrichtung drehbar gelagert ist. Die Abtriebswelle ist mit einem Wischarm gekoppelt und betätigt diesen mit einer rotierenden bzw. pendelnden Aptriebsbewegung. Zum Schutz gegen eindringendes Wasser ist im Bereich der Abtriebswelle und der Lageraufnahme eine Wasserschutzkappe angeordnet, die mit einer Wasserablaufeinrichtung versehen ist, über die in den Innenraum der Wasserschutzkappe eindringendes Wasser abgeleitet werden kann. Die Wasserablaufeinrichtung stellt sicher, dass versehentlich in das Innere der Wasserschutzkappe eingedrungenes Wasser wieder abgeleitet wird, bevor das Wasser in die Lageraufnahme der Abtriebswelle und weiter bis zum Antriebsmotor gelangen kann. Hierbei stellt die Wasserschutzkappe bereits an sich einen Schutz gegen das eindringende Wasser dar, wobei die Wasserablaufeinrichtung eine zusätzliche Schutzfunktion für den Fall ausübt, dass von außen Wasser in den Innenraum der Wasserschutzkappe eindringt.

Die Wasserschutzkappe ist zweckmäßig über ein Dichtelement gegenüber der rotierend gelagerten Abtriebswelle abgedichtet, wodurch im Normalfall bereits ein hinreichend guter Schutz gegen eindringendes Wasser gegeben ist. Sollte als Folge starker Beanspruchung und Abnutzung die Dichtfunktion nicht mehr vom Dichtelement ausgeübt werden können, so wird das eindringende Wasser über die Wasserablaufeinrichtung der Wasserschutzkappe wieder abgeführt.

Bestandteil der Wasserablaufeinrichtung ist ein Bohrung, die in die Wandung der Wasserschutzkappe eingebracht ist und die Innenseite der Wasserschutzkappe mit der Umgebung verbindet. Das eingedrungene Wasser wird über die Bohrung in die Umgebung abgeleitet.

Erfindungsgemäβ umfaßt die Wasserablaufeinrichtung zudem ein Wasserführungswandteil, welches das eingedrungene Wasser zielgerichtet ableitet, insbesondere von der Scheibenwischvorrichtung und dem Antriebsmotor wegführt. Das Wasserführungswandteil hat somit die Funktion einer zielgerichteten Wasserführung, wobei gegebenenfalls auch eine Strömungsverbindung zwischen dem Wasserführungswandteil und einem weiteren Bauteil entweder der Scheibenwischvorrichtung oder einem sonstigen Bauteil des Kraftfahrzeuges in Betracht kommt, beispielsweise einem Wasserführungskanal, über den das abzuleitende Wasser weiter abtransportiert wird. Die Bohrung in der Wandung der Wasserschutzkappe und das Wasserführungswandteil befinden sich zweckmäßigerweise an der tiefsten Stelle im freien Innenraum der Wasserschutzkappe, um sicherzustellen, dass sich im Innenraum kein eingedrungenes Wasser ansammeln kann. Das Wasserführungswandteil ist in unmittelbarer Nachbarschaft zu der Bohrung auf der Außenseite der Wasserschutzkappe angeordnet, um das über die Bohrung austretende Wasser unmittelbar aufnehmen zu können und Fehlströmungen zu vermeiden.

Gemäß weiterer vorteilhafter Ausführung ist vorgesehen, dass die Wasserschutzkappe die Lageraufnahme umgreift, die zweckmäßig als Lagerbuchse ausgeführt ist. Die Wasserschutzkappe ist vorzugsweise hülsenförmig ausgebildet und besitzt üblicherweise einen zylindrischen Querschnitt und übergreift die Lageraufnahme axial. Die Bohrung befindet sich unmittelbar benachbart zur Stirnseite der Lagerbuchse.

Das Wasserführungsteil axial in Höhe der Lagerbuchse auf der Außenseite der Wasserschutzkappe angeordnet ist. In dieser Ausführung bietet die Lagerbuchse eine Stütze für die umgreifende Wasserschutzkappe und das außenseitig angeordnete Wasserführungsteil, so dass auch eine Verwendung von verhältnismäßig weichem und nachgiebigem, dünnem Material für die Wasserschutzkappe in Betracht kommt, insbesondere Kunststoff, und dennoch gewährleistet ist, dass die im Betrieb auftretenden statischen und dynamischen Kräfte abgestützt werden und nicht zu einer Funktionsbeeinträchtigung führen.

Das Wasserführungswandteil ist insbesondere einteilig mit der Wandung der Wasserschutzkappe ausgebildet und in Form eines radial überstehenden Wandabschnittes auf der Außenseite der Wasserschutzkappe ausgeführt.

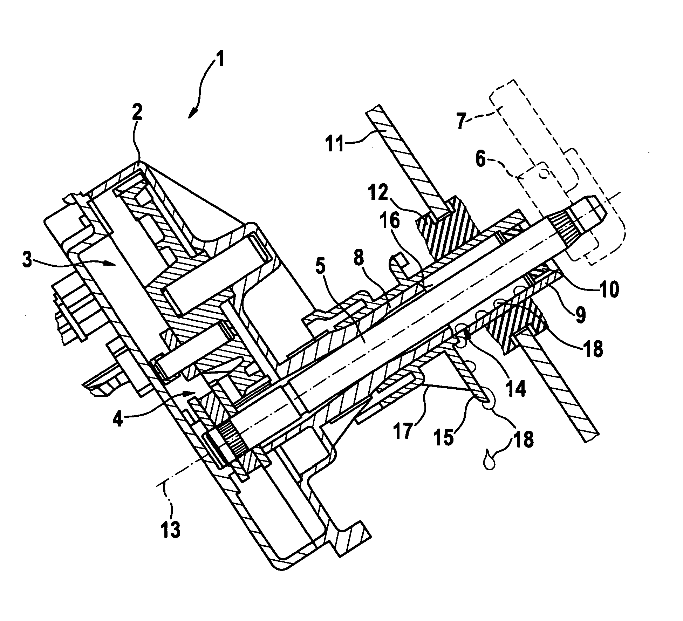

Weitere Vorteile und zweckmäßige Ausführungen sind den weiteren Ansprüchen, der Figurenbeschreibung und der Zeichnung zu entnehmen, in der ein Schnitt durch eine Scheibenwischvorrichtung dargestellt ist.

Die Scheibenwischvorrichtung 1 wird insbesondere in Kraftfahrzeugen als Heckscheibenwischvorrichtung eingesetzt. Die Scheibenwischvorrichtung 1 umfasst in einem Gehäuse 2 einen elektrischen Antriebsmotor 3, dessen Anker über eine Getriebeanordnung 4 mit einer Abtriebswelle 5 gekoppelt ist und diese in eine rotierende bzw. pendelnde Bewegung versetzt. An der der Getriebeanordnung 4 gegenüberliegenden Stirnseite ist die Abtriebswelle 5 über eine Befestigungsanordnung 6 mit einem Wischarm 7 verbunden, der auf der zu reinigenden Scheibe aufliegt. Die Abtriebswelle 5 ist in einer Lagerbuchse 8, die eine Lageraufnahme bildet, rotierend gelagert. Die Lagerbuchse 8 ist zweckmäßig einteilig mit dem Gehäuse 2 der Scheibenwischvorrichtung ausgebildet.

Die Abtriebswelle 5 ist von einer Wasserschutzkappe 9 übergriffen, die hohlzylindrisch bzw. hülsenartig ausgebildet ist und auf die Abtriebswelle 5 aufgeschoben ist. Die Wasserschutzkappe 9 übergreift axial - also in Richtung der Längs- bzw. Rotationsachse 13 der Abtriebswelle gesehen - die Außenwand der Lagerbuchse 8. Auf der dem Wischarm 7 zugewandten Seite ist die die Abtriebswelle 5 übergreifende Wasserschutzkappe 9 an ihrer Stirnseite über ein Dichtelement 10 wasserdicht zur Abtriebswelle abgedichtet. Auf der Außenwand der Wasserschutzkappe 9 liegt ein Scheibendichtungsteil 12 an, über das die Fahrzeugscheibe 11 - im Ausführungsbeispiel die Heckscheibe des Fahrzeugs - wasserdicht gegenüber der Scheibenwischvorrichtung 1 abgedichtet ist.

In die Wandung der Wasserschutzkappe 9 ist eine Bohrung 14 eingebracht, über die der von der Wasserschutzkappe eingeschlossene Innenraum mit der Umgebung verbunden ist. Diese Bohrung 14 befindet sich in unmittelbarer Nähe zur Stirnseite 16 der Lagerbuchse 8. Auf der Außenseite der Wasserschutzkappe 9 ist außerdem ein radial überstehendes Wasserführungswandteil 15 angeordnet, das einteilig mit der Wandung der Wasserschutzkappe ausgebildet ist. Dieses Wasserführungswandteil 15 liegt ebenfalls in unmittelbarer Nachbarschaft zu der Bohrung 14. Die Wasserschutzkappe 9 ist axial so weit auf die Lagerbuchse 8 aufgeschoben, dass das Wasserführungswandteil 15 axial sich in Höhe der Lagerbuchse befindet und hierdurch eine Abstützung erfährt. Das an der Außenseite der Wasserschutzkappe 9 radial überstehende Wasserführungswandteil 15 kann über einen Stützsteg 17 mit der zylindrischen Wandung der Wasserschutzkappe 9 verbunden sein, wodurch das Wasserführungswandteil 15 eine weitere Abstützung erfährt.

Die Bohrung 14 und das Wasserführungswandteil 15 dienen zur Ableitung von eingedrungenem Wasser aus dem von der Wasserschutzkappe 9 begrenzten ringförmigen Innenraum zwischen der Mantelfläche der Abtriebswelle 5 und der Innenwand der Wasserschutzkappe. Eingetragen sind im Ausführungsbeispiel mehrere Wassertropfen 18, die entlang der Innenwandung der Wasserschutzkappe 9 schräg nach unten in Richtung der Bohrung 14 ablaufen, durch die Bohrung 14 radial nach außen auf das Wasserführungswandteil 15 geleitet und von diesem radial nach außen und damit weg von der Scheibenwischvorrichtung 1 abgeführt werden. Aufgrund der schrägen Einbauposition der Scheibenwischvorrichtung 1 liegt die Abtriebswelle 5 und damit auch der von der Wasserschutzkappe 9 begrenzte, ringförmige Innenraum schräg im Raum, so dass die Wassertropen 18 entlang der eine Schräge bildenden Innenwand der Wasserschutzkappe nach unten in Richtung der Bohrung 14 strömen kann. Da die Bohrung 14 sich in unmittelbarer Nachbarschaft zur Stirnseite 16 der Lagerbuchse 8 befindet, kann sich im Innenraum kein Wasser ansammeln, sämtliches eingedrungenes Wasser, welches insbesondere im Falle einer Undichtigkeit über das Dichtelement 10 eindringt, wird sofort aus dem Innenraum der Wasserschutzkappe abgeleitet.

Um sicherzustellen, dass die Wasserschutzkappe in der Weise montiert ist, dass die Wasserablaufbohrung immer an der tiefsten Stelle liegt, kann die Wasserschutzkappe über eine entsprechende Führung zum Gehäuse der Scheibenwischvorrichtung lagerichtig montiert werden.

## Patentansprüche

1. Scheibenwischvorrichtung, insbesondere für ein Kraftfahrzeug, mit einem Antriebsmotor (3), der eine Abtriebswelle (5) beaufschlagt, welche in einer Lageraufnahme (8) in einem Gehäuse (2) der Scheibenwischvorrichtung (1) drehbar gelagert ist und einen Wischarm (7) betätigt, wobei im Bereich der Abtriebswelle (5) und der als Lagerbuchse (8) ausgeführten Lageraufnahme eine Wasserschutzkappe (9) angeordnet ist, die eine Wasserablaufeinrichtung (14, 15) zur Ableitung von in den Innenraum der Wasserschutzkappe (9) eindringenden Wassers aufweist, wobei die Wasserschutzkappe (9) die Lagerbuchse (8) umgreift und die Wasserablaufeinrichtung ein Wasserführungswandteil (15) umfasst, entlang dem eingedrungenes Wasser ableitbar ist,
**dadurch gekennzeichnet, dass** die Wasserablaufeinrichtung eine Bohrung (14) in der Wandung der Wasserschutzkappe (9) umfasst und dass das Wasserführungswandteil (15) benachbart zur Bohrung (14) in der Wandung der Wasserschutzkappe (9) und axial in Höhe der Lagerbuchse (8) auf der Außenseite der Wasserschutzkappe (9) angeordnet ist.

2. Scheibenwischvorrichtung nach Anspruch 1,
**dadurch gekennzeichnet, dass** das Wasserführungswandteil (15) einteilig mit der Wandung der Wasserschutzkappe (9) ausgebildet ist.

3. Scheibenwischvorrichtung nach Anspruch 1 oder 2,
**dadurch gekennzeichnet, dass** das Wasserführungswandteil (15) rechtwinklig zur Wandung der Wasserschutzkappe (9) angeordnet ist.

4. Scheibenwischvorrichtung nach einem der Ansprüche 1 bis 3,
**dadurch gekennzeichnet, dass** zwischen der Wasserschutzkappe (9) und der Abtriebswelle (5) ein Dichtelement (10) angeordnet ist.

5. Verwendung der Scheibenwischvorrichtung nach einem der Ansprüche 1 bis 4 als Heckscheibenwischvorrichtung.

## Claims

1. Wiper device, in particular for a motor vehicle, with a driving motor (3) which acts upon an output shaft (5) which is mounted rotatably in a bearing receptacle (8) in a housing (2) of the wiper device (1) and actuates a wiper arm (7), wherein a water guard cap (9) is arranged in the region of the output shaft (5) and of the bearing receptacle, which is designed as a bearing bushing (8), said water guard cap having a water drainage means (14, 15) for conducting away water penetrating the interior of the water guard cap (9), wherein the water guard cap (9) embraces the bearing bushing (8), and the water drainage means comprises a water-guiding wall part (15) along which water which has penetrated can be conducted away, **characterized in that** the water drainage means comprises a bore (14) in the wall of the water guard cap (9), and **in that** the water-guiding wall part (15) is arranged on the outside of the water guard cap (9) adjacent to the bore (14) in the wall of the water guard cap (9) and axially level with the bearing bushing (8).

2. Wiper device according to Claim 1, **characterized in that** the water-guiding wall part (15) is formed integrally with the wall of the water guard cap (9).

3. Wiper device according to Claim 1 or 2, **characterized in that** the water-guiding wall part (15) is arranged at a right angle to the wall of the water guard cap (9).

4. Wiper device according to one of Claims 1 to 3, **characterized in that** a sealing element (10) is arranged between the water guard cap (9) and the output shaft (5).

5. Use of the wiper device according to one of Claims 1 to 4 as a rear window wiper device.

## Revendications

1. Dispositif d'essuie-glace, notamment pour un véhicule automobile, comprenant un moteur d'entraînement (3) qui sollicite un arbre de sortie (5) qui est monté rotatif dans un logement de palier (8) dans un boîtier (2) du dispositif d'essuie-glace (1) et qui actionne un bras d'essuie-glace (7), un capuchon de protection contre l'eau (9) étant disposé dans la région de l'arbre de sortie (5) et du logement de palier réalisé sous forme de douille de palier (8), lequel capuchon de protection contre l'eau comprend un dispositif d'écoulement d'eau (14, 15) pour l'évacuation de l'eau pénétrant dans l'espace intérieur du capuchon de protection contre l'eau (9), le capuchon de protection contre l'eau (9) venant en prise autour de la douille de palier (8) et le dispositif d'écoulement d'eau comportant une partie de paroi de guidage d'eau (15) le long de laquelle l'eau ayant pénétré peut être évacuée, **caractérisé en ce que** le dispositif d'écoulement d'eau comporte un alésage (14) dans la paroi du capuchon de protection contre l'eau (9), et **en ce que** la partie de paroi de guidage d'eau (15) est disposée à proximité de l'alésage (14) dans la paroi du capuchon de protection contre l'eau (9) et axialement à hauteur de la douille de palier (8) sur le côté extérieur du capuchon de protection contre l'eau (9).

2. Dispositif d'essuie-glace selon la revendication 1,
**caractérisé en ce que** la partie de paroi de guidage d'eau (15) est réalisée d'une seule partie avec la paroi du capuchon de protection contre l'eau (9).

3. Dispositif d'essuie-glace selon la revendication 1 ou 2,
**caractérisé en ce que** la partie de paroi de guidage d'eau (15) est disposée perpendiculairement à la paroi du capuchon de protection contre l'eau (9).

4. Dispositif d'essuie-glace selon l'une quelconque des revendications 1 à 3,
**caractérisé en ce qu'**un élément d'étanchéité (10) est disposé entre le capuchon de protection contre l'eau (9) et l'arbre de sortie (5).

5. Utilisation du dispositif d'essuie-glace selon l'une quelconque des revendications 1 à 4 en tant que dispositif d'essuie-glace pour vitre arrière.
